# EUROPÄISCHE PATENTSCHRIFT

(11) **EP 0 900 352 B1**
(45) Veröffentlichungstag und Bekanntmachung des Hinweises auf die Patenterteilung: **10.01.2001**
(21) Anmeldenummer: 97921806.2
(22) Anmeldetag: 27.04.1997
(51) Int. Cl.: F24D 3/10, F24D 10/00

(54) **VERFAHREN ZUR NACHTRÄGLICHEN HERSTELLUNG UND REVISION VON DER HAUSANSCHLUSSSEITE FÜR EINE STICHLEITUNG MIT EINEM VOR- UND RÜCKLAUFKANAL ZWISCHEN EINEM EINROHR-FERNHEIZKANAL UND EINEM WÄRMEVERBRAUCHER**
PROCESS FOR SUBSEQUENTLY INSTALLING AND INSPECTING A STUB WITH A FLOW AND RETURN PIPE FROM THE SIDE OF THE HOUSE SERVICE CONNECTION BETWEEN A ONE-PIPE LONG-DISTANCE HEATING PIPE AND A HEAT CONSUMER
PROCEDE D'INSTALLATION ET DE REVISION ULTERIEURES DEPUIS UN BRANCHEMENT D'IMMEUBLE D'UN CONDUIT DE BRANCHEMENT POURVU D'UNE CANALISATION MONTANTE ET D'UNE CANALISATION DESCENDANTE ENTRE UNE CANALISATION MONOTUBULAIRE DE CHAUFFAGE A DISTANCE ET UN CONSOMMATEUR DE CHALEUR

(30) Priorität: 28.04.1996 DE 19616885
(43) Veröffentlichungstag der Anmeldung: 10.03.1999
(73) Patentinhaber: Hollemann, Karl, 31177 Harsum (DE)
(72) Erfinder: Hollemann, Karl, 31177 Harsum (DE)
(86) Internationale Anmeldenummer: EP9702181
(87) Internationale Veröffentlichungsnummer: WO9741394

(56) Entgegenhaltungen:
- DE-A- 2 856 664
- DE-A- 3 634 104
- FR-A- 2 098 652

## Beschreibung

Diese Erfindung betrifft ein Verfahren zur nachträglichen Herstellung und Revision einer Stichleitung mit einem Vor- und Rücklaufkanal gemäß dem Oberbegriff des Anspruchs 1.

Die Patentschrift DE 36 34 104 zeigt die Ausbildung einer Stichleitung mit einem Vor- und Rücklaufkanal. Das Innenrohr mußte hier zwangsläufig über den Stahlrohranschluß des Abzweiges hinausragen, um die Verbindung technisch herstellen zu können.
Diese Verbindung konnte nur Zug um Zug zwischen der Stichleitung und dem Innenrohr vonstattengehen, und zwar so, daß zuerst die Verbindung für das Innenrohr hergestellt werden mußte, und danach die Stichleitung geschweißt werden konnte.
Es wurden mehrere teuere Spezial-Montageteile sowie ein längeres Stahlrohrzwischenstück benötigt, welche zusätzlich als Wärmetauscherflächen wirkten.

Eine Montage des Innenrohrs von der Hausanschlußseite des Wärmeverbrauchers war nicht möglich.
Fachleute der Fernwärme befürchteten hier schwer zu ortende Strömungskurzschlüsse infolge einer unkontrollierten Wärmeentwicklung beim Schweißen der Stichleitung.
Nach Fertigstellung der Stichleitung war eine einfache Kontrolle des Vor- und Rücklaufkanals nicht mehr durchführbar, wie sie beispielsweise bei unkontrollierter Schweißwärmeentwicklung auf das Kunststoffinnenrohr notwendig werden konnte.
Über ein vorher eingefädeltes Zugseil mußte die Schutzmanschette nachher aus dem Zwischenraum des RUcklaufkanals gezogen werden, um so das Innenrohr vor der Wärmeentwicklung beim Schweißen zu schützen. Ein nachträgliches Austauschen eines Innenrohrs oder eine Revision war technisch nicht mehr möglich bzw. sehr erschwert. Diese Ausgangslage behinderte außerdem den Einsatz eines preiswerteren Kunststoffes für das Innenrohr.

Es galt, diese vorgenannten Mängel zu beheben.
Der Erfindung liegt daher die Aufgabe zugrunde, eine nachträgliche Herstellung, Montage und Revision des Innenrohrs (10) bzw. der Stichleitung von der Hausanschlußseite beim Wärmeverbraucher zu erreichen, ohne daß das Innenrohr durch die Wärmeentwicklung beim Schweißen der Stichleitung (1) (als Kunststoffmantel-Verbundrohr gezeichnet) gefährdet wird.
Desweiteren wird der Arbeitsablauf bei der Herstellung der Stichleitung (1) nicht mehr behindert, sondern außerordentlich vereinfacht. Die Herstellung und Montage des Innenrohrs kann dadurch in wenigen Minuten erfolgen.

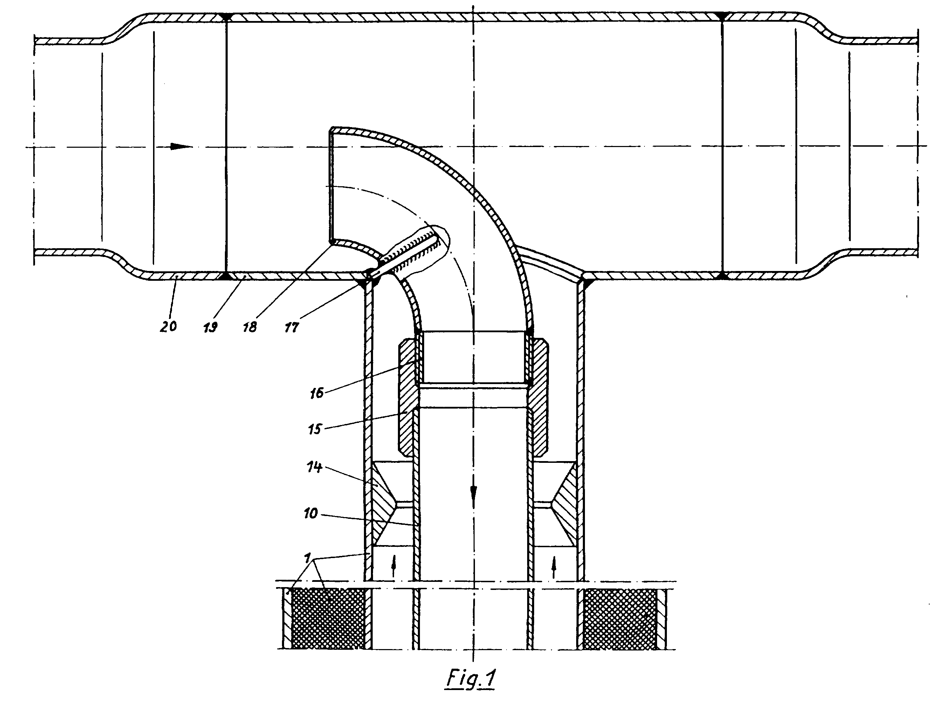

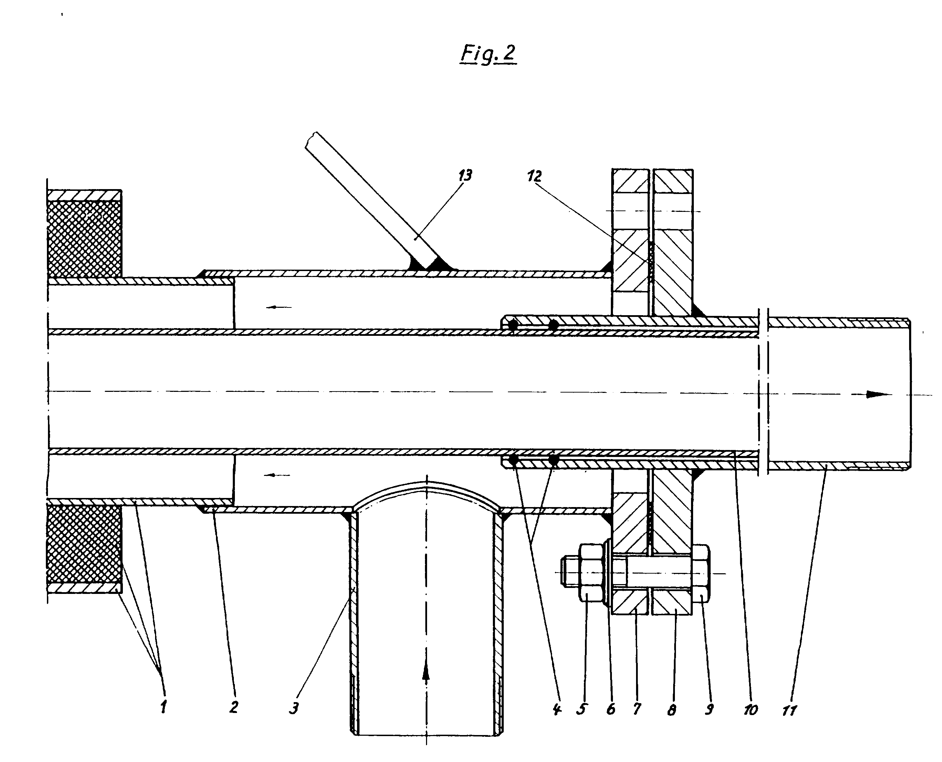

Eine vorteilhafte Ausgestaltung der Erfindung wird anhand der Zeichnungen Fig. 1 und Fig. 2 beschrieben.
Fig. 1 zeigt den Anschluß der Stichleitung am Einrohr-Fernheizkanal als Abzweig. Fig. 2 zeigt den Hausanschluß.

Das Herstellen, die Montage und die spätere Revision des Innenrohrs (10) bzw. der Stichleitung geschieht direkt von der Hausanschlußseite des Wärmeverbrauchers über eine größere Entfernung von hier bis zum Abzweig. Zu diesem Zweck befindet sich an der Hausanschlußseite eine Flanschverbindung. Ein Ende vom Innenrohr (10) wird mit einer Spezial-Übergangsmuffe (15) mittels Muffenschweißen verbunden und durch den geöffneten Flanschring (7) in die Stichleitung eingeführt. Teilstücke des Innenrohrs werden beispielsweise durch Schweißen zu längeren Rohreinheiten zusammengefügt und nach und nach in die Stichleitung geschoben. Zumindest bei den kleinen Rohrabmessungen kann das Innenrohr z.B. von einer Haspel oder Spule abgerollt und zu einer kompletten Innenrohreinheit - ohne Teilstücke - verarbeitet werden. Dadurch sind dann zusätzliche Schweißverbindungen am Innenrohr vermeidbar. Kurz vor dem Gewinderohrnippel (16) wird das Innenrohr mit der Spezial-Übergangsmuffe (15) mittels eines Keilrings (14) oder Keilsegmenten, welche um drei mal 120° versetzt sind, zwangszentriert und zum Gewinderohrnippel geführt, bis ein deutlicher Schubwiderstand auftritt. Von der Hausanschlußseite wird nun das überragende Innenrohr von Hand oder entsprechend hergerichtetem Werkzeug, einem prismaförmigen Windeisen, eingespannt und an dem Gewinderohrnippel (16) festgeschraubt.
Der Gewinderohrnippel ist direkt hinter dem Bogenstück (18) des Abzweiges angeschweißt. Dadurch entfällt auch ein größeres Zwischenstück Stahlrohr als unnötige Wärmetauscherfläche.
Der Keilring (14) bzw. die Keilsegmente sind so zur Spezial-Übergangsmuffe angeordnet, daß die Spezial-Übergangsmuffe (15) mit dem Innenrohr sicher zentriert und die Strömung im Rücklaufkanal nicht unnötig behindert wird. Zu diesem Zweck muß auch der Außendurchmesser der Spezial-Übergangsmuffe zum Rücklaufkanal angepaßt werden. Die Befestigung des Keilrings (14) bzw. der Keilsegmente kann z.B. durch Hartlöten oder schweißen erfolgen. Durch die Zwangszentrierung ist es möglich, daß das Innenrohr auch von einer weit entfernten Hausanschlußseite zum Abzweig hin sicher zusammengeschraubt werden kann. Die Länge der Stichleitung kann dabei mehr als 35m betragen!
Nach Bemessen des temperaturabhängigen Längenausdehnraumes ist das Innenrohr zu kürzen. Zuletzt wird das lose Flanschende (8) mit einer Flachdichtung (12) versehen und mit 0-Ringen (4) über das Innenrohr geschoben sowie mit den Flanschschrauben festgespannt und abgedichtet. Aus Gründen der Sicherheit sind zwei 0-Ringe vorgesehen.
Für die Demontage oder Revision laufen die Arbeitsgänge andersherum ab. Nach mehreren Betriebsjahren kann z.B. die Stichleitung mit dem Innenrohr einer Revision unterzogen werden bzw. bei Bedarf ein anderes Innenrohr eingesetzt werden. Das ergibt eine erhöhte Sicherheit für die Stichleitung, inbesondere im Hinblick auf den Einsatz eines preiswerteren Kunststoffs für das Innenrohr. Diese Bedeutung mag ein aktueller Kostenhinweis belegen. Ein Innenrohr aus PVDF 32mm x 2,4mm kostet zur Zeit 42,00M/m, ein Innenrohr aus PP mit gleichen Abmessungen aber nur 3,8DM/m.
Das Rohr (2) ist mit dem Flanschring (7) verschweißt. Das Führungsrohr (11) ist mit dem Flansch (8) verschweißt und nimmt mit den 0-Ringen die Führung und Lagerung des Innenrohrs vor. Das Rohrgewindestück (3) ist am Rohr (2) angeschweißt. Zwei Reduzierstücke (20) sind am Rohrstück (19) angeschweißt.

Wegen der angestrebten hohen Strömungsgeschwindigkeit im Einrohr-Fernheizkanal ist das Bogenstück (18) möglichst weit außermittig im querschnittserweiterten Rohrstück (19) anzuschweißen. Das Umlenkteil (17) wird unter einem Winkel von ca. 30° - 35° angeordnet und bietet dabei den geringsten Strömungswiderstand. Drei um 120° versetzt angeschweißte Flacheisen dienen als Festpunkt (13).
Für eine spätere Demontage des Innenrohrs ist es wichtig, daß der Keilring (14) bzw. die Keilsegmente durch Ablagerungen nicht zugesetzt oder durch Korrosion beschädigt werden. Das läßt sich durch die Formgebung und Werkstoffwahl günstig beeinflussen.
Erst wenn alle Schweißarbeiten am Stahlrohr vorgenommen sind oder die Stichleitung schon in der Erde liegt, braucht die Herstellung und Montage des Innenrohrs vorgenommen werden.

Die Vorteile des Verfahrens sind im Arbeitsablauf und in den Herstellkosten sowie bei der nachträglichen Revision der Stichleitung sofort zu erkennen. Hiermit wird außerdem eine erhebliche Verbesserung der Betriebssicherheit für das System Fernwärme bewirkt.

## Patentansprüche

1. Verfahren zur Montage einer Stichleitung mit einem zusätzlichen, mit einem Bogenstück als Festlager verbundenen Innenrohr zwischen einem Abzweig in einem Einrohr-Fernheizkanal und einem entfernt liegenden Wärmeverbraucher, insbesondere einem Hausanschluß, dadurch gekennzeichnet, daß die Montage des Innenrohrs (10) im Innenraum der Stichleitung (1) mit Hilfe einer Zwangszentrierung (14) und durch Verschraubung am Bogenstück (18) im Anschluß an die Montage der Stichleitung (1) von dem vom Einrohr-Fernheizkanal in größerer Entfernung liegenden Wärmeverbraucheraus erfolgt.

2. Verfahren nach Anspruch 1, dadurch gekennzeichnet, daß die Stichleitung (1) am Wärmeverbraucher vom Wärmeverbraucher gelöst wird.

3. Verfahren nach Anspruch 1, dadurch gekennzeichnet, daß die Verschraubung mit einer Spezial-Übergangsmuffe (15) erfolgt.

4. Verfahren nach Anspruch 1 und 3, dadurch gekennzeichnet, daß der zurückgelegte Schraubweg des Innenrohrs (10) durch eine am Innenrohr (10) angebrachte Markierung und den Anstieg des Drehmoments der Spezial-Übergangsmuffe (15) festgestellt wird.

5. Anordnung zur Durchführung der Montage einer Stichleitung mit einem zusätzlichen Innenrohr nach Anspruch 1, dadurch gekennzeichnet, daß am Bogenstück (18) in der Stichleitung (1) ein Gewinderohrnippel (16), in der Stichleitung (1) eine Zwangszentrierung (14) und auf einem Ende des Innnenrohrs (10) eine Spezial-Übergangsmuffe (15) befestigt sind.

6. Anordnung nach Anspruch 5, dadurch gekennzeichnet, daß die Zwangszentrierung (14) aus einem Keilring besteht, der in einem solchen Abstand zum Gewinderohrnippel (16) angebracht ist, daß nach dem Verschrauben der Spezial-Übergangsmuffe (15) der Durchfluß für das Heizmedium gewährleistet ist.

7. Anordnung nach Anspruch 5 und 6, dadurch gekennzeichnet, daß die Spezial-Übergangsmuffe (15) eine Gewindemuffe ist.

## Claims

1. Process for the assembly of a stub with an additional interior pipe connected with an elbow piece in the form of fixed bearings between a branch in a single-pipe distant heating flue and a heat consumer which is situated at a distance, especially a household connection, characterised in that the interior pipe (10) is situated in the interior of the stub(1) with the assistance of a positive centring (14) and by screwing it onto the elbow piece (18) after the assembly of the stub (1), from which the single-pipe distant heating flue which is situated at a greater distance from the heat consumer.

2. Process in accordance with claim 1, characterised by the stub (1) being disconnected from the heat consumer at the heat consumer itself.

3. Process in accordance with claim 1, characterised by the union piece being in the form of a special pipe-joint (15).

4. Process in accordance with claims 1 and 3, characterised by the distance covered by the interior pipe (10) thread being determined by a mark on the interior pipe (10) and an increase in the torque of the special pipe-joint (15).

5. Arrangement for the assembly of a stub with an additional pipe in accordance with claim 1, characterised by a threaded barrel nipple (16) being mounted on the elbow piece (18) in the stub (1), a positive centring (14) being in the stub (1) and a special pipe-joint (15) being mounted at one end of the interior pipe (10).

6. Arrangement in accordance with claim 5, characterised by the positive centring (14) comprising a tapered ring, which is mounted at such a distance from the threaded barrel nipple (16) that after the screwing of the special pipe-joint (15), the flow-through of the heating medium is guaranteed.

7. Arrangement in accordance with claims 5 and 6, characterised by the special pipe-joint (15) being a threaded joint.

## Revendications

1. Procédé de montage d'un câble de dérivation avec un tube intérieur supplémentaire relié à une pièce en arc tenant lieu de garniture fixe entre une dérivation dans un canal de chauffage à distance à tube unique et un consommateur thermique éloigné, notamment un raccord domestique, caractérisé par le fait que le montage du tube intérieur (10) à l'intérieur du câble de dérivation (1) est réalisé à l'aide d'un dispositif de centrage forcé (14) et par vissage sur la pièce en arc (18) après le montage du câble de dérivation (1) à partir du consommateur thermique assez éloigné du canal de chauffage à distance à tube unique.

2. Procédé conformément à la revendication 1, caractérisé par le fait que le câble de dérivation (1) se trouvant sur le consommateur thermique est détaché du consommateur thermique.

3. Procédé conformément à la revendication 1, caractérisé par le fait que le vissage est réalisé avec un manchon de réduction spécial (15).

4. Procédé conformément aux revendications 1 et 3, caractérisé par le fait que le trajet parcouru par la vis du tube intérieur (10) est déterminé à l'aide d'un repère sur le tube intérieur (10) et de l'augmentation du couple du manchon de réduction spécial (15).

5. Dispositif pour la réalisation du montage d'un câble de dérivation avec un tube intérieur supplémentaire conformément à la revendication 1, caractérisé par fait que, sur la pièce en arc (18), un embout mâle fileté (16) est fixé sur le câble de dérivation (1), un dispositif de centrage forcé (14) est fixé sur le câble de dérivation (1) et un manchon de réduction spécial (15) est fixé sur une extrémité du tube intérieur (10).

6. Dispositif conformément à la revendication 5, caractérisé par le fait que le dispositif de centrage forcé (14) se compose d'une bague de calage installée à une telle distance de l'embout mâle fileté (16) que, après le vissage du manchon de réduction spécial (15), la circulation de l'agent de chauffage soit garantie.

7. Dispositif conformément aux revendications 5 et 6, caractérisé par le fait que le manchon de réduction spécial (15) est un manchon fileté.
